Europäisches Patentamt

European Patent Office

Office européen des brevets

(11) Publication number: **0 153 304 B1**

(12) **EUROPEAN PATENT SPECIFICATION**
**published in accordance with Art.**
**158(3) EPC**

(45) Date of publication of patent specification: 24.04.91    (51) Int. Cl.⁵: **B29C  55/00**

(21) Application number: 83902604.4

(22) Date of filing: 19.07.83

(86) International application number:
PCT/US83/01093

(87) International publication number:
WO 85/00550 (14.02.85 85/04)

(54) MANUFACTURE OF ASSEMBLAGES OF FASTENERS.

(43) Date of publication of application:
04.09.85 Bulletin  85/36

(45) Publication of the grant of the patent:
24.04.91 Bulletin  91/17

(84) Designated Contracting States:
AT BE CH DE FR LI LU NL SE

(56) References cited:
JP-A-57 129 482      JP-B-52 042 827
US-A- 2 785 729      US-A- 3 380 122
US-A- 3 781 402      US-A- 3 983 657
US-A- 4 045 651      US-A- 4 304 743
US-A- 4 813 894

(73) Proprietor: **Dennison Manufacturing Company**
**300 Howard Street**
**Framingham, MA 01701(US)**

(72) Inventor: **PARADIS, Joseph, R.**
**60 Plymouth Road**
**Holden, MA 01520(US)**

(74) Representative: **Robinson, Anthony John**
**Metcalf et al**
**Kilburn & Strode 30 John Street**
**London, WC1N 2DD(GB)**

## Description

BACKGROUND OF THE INVENTION

This invention relates to assemblages of fasteners and their manufacture, and more particularly but not exclusively, to assemblages of fasteners which are dispensable by machine for the tagging and attachment of articles.

Many different types of fasteners have been used for the tagging and attachment of articles. One construction is described in United States Serial No. 153,154, now abandoned. These fasteners were produced by molding an assemblage of individual fasteners, each with a thin filament interconnecting a cross bar with a head, and joined together by necks to a common runner bar. These fasteners can be dispensed using a gun as described in United States Patent Specification No. 3,103,666.

After the development of the fastener described in Specification No. 153,154, it was discovered that these fasteners could be significantly and unexpectedly improved by being stretched as described in Patent Specification No. 3,444,597, which also describes the stretching of the individual fasteners of an assemblage simultaneously. Various methods for producing stretched fasteners are described in Patent Specification Nos. 3,380,122, 3,444,597, and 3,457,598. As described in those specifications, the assemblages of fasteners are molded with slight tapers in a portion of their filaments in order to ensure that the stretching will extend substantially to the junctions of the filaments with the cross bars. While the manufacturing methods described in these specifications provide suitable fasteners, they require an appreciable time interval, e.g. cycle time, between moulding and the completion of stretching. In addition, while these methods are eminently suitable for easily stretchable crystalline materials, such as nylon, they are less suitable for relatively rigid crystalline materials such as polypropylene.

Another difficulty encountered with materials such as polypropylene is that the cross bars tend to be pulled forward at their junctions with the filaments. This distortion of the cross bar can make the fasteners inoperative and produce jamming in dispensing devices.

There is shown in US-A-4304743 a method of manufacturing an assemblage of fasteners which comprises moulding the assemblage as a set of connected individual fasteners, each individual attachment including a cross bar which is joined to a filament and stretching the fasteners while heating the fasteners and while protecting the cross bars from adverse heating effects. In this arrangement, heat is delivered to the filaments of the fasteners by an infra-red heater and a shield is provided to protect the cross bars from adverse heating. While this arrangement is satisfactory, it is difficult to control the heating adequately so as to direct sufficient heat to the filament, particularly adjacent the junction with the cross-bar, without excessively heating this region and so weakening the region that distortion, known as Y-ing, can occur as mentioned above.

Japanese specification JP-A-57-129482 describes apparatus for stretching fasteners which includes a clamp having heated jaws which engage around the cross bar and an additional heater which appears to blow hot air at the filament in the region adjacent the jaws on the side of the jaws away from the cross bar. In this arrangement the cross bar and the filament in the region adjacent the junction with the cross bar are directly heated by the heated jaws with additional heating from the hot air blower. Again, it will be extremely difficult, if not impossible, to control the heating in such a way that the junction is not over-heated with the occurrence of Y-ing.

A further method of manufacturing an assemblage of fasteners which comprises moulding the assemblages as a set of connected individual fasteners, each individual fastener including a cross bar which is joined to a filament is described in US-A-4183894. This describes stretching the fasteners simultaneously while subjecting them to controlled heating at the junctions of their cross bars and filaments. Again, it will be extremely difficult to control the heating in such a way that the junction is not overheated with the occurrence of Y-ing.

The problem of Y-ing is overcome by the present invention according to which the controlled heating is effected by contacting each filament by a heated probe at a position adjacent to but spaced from the respective cross bar, and said filament is subjected to a supplemental heating effect.

The invention overcomes the problems referred to by applying heat directly to the region which requires heating without directing heat to adjacent regions which should not be excessively heated. Thus, the cross bar itself will remain sufficiently cool for Y-ing to be avoided.

Details of certain preferred features are as follows:

The assemblages may be fed into a stretching machine with jaws that grip the fasteners at opposite ends. The jaws are then separated to take up slack in the filaments which are simultaneously subjected to a controlled heating effect with the associated cross bars being shielded or masked. The jaws are then separated for stretching, followed by relaxation to permit removal of the stretched assemblage from the stretching machine.

The probe is heated and in contact with the filaments. It is desirable for the probe to be insulated as well.

The mask or shield is advantageously a part of a stretching jaw, but it may be a separate member.

The fasteners can be produced in a mould with separable parts, with the filaments being subjected to controlled heating as the mould parts are separated.

The controlled heating is desirably achieved using an infra-red radiator, in conjunction with the heated probe.

Each of the filaments desirably has a taper over a portion of its length in order to ensure that the stretching extends to the junctions with the cross bars. However, the filaments may be of other configuration, including a generally cylindrical configuration.

The fasteners are preferably of a crystalline material whose molecules are reoriented by stretching and are desirably selected from nylon, polyethylene, polypropylene and polyester and acetal resins.

The invention may be carried into practice in various ways but a number of examples will now be described with reference to the accompanying drawings, in which:

Figure 1A is a perspective view of an assemblage of fasteners;

Figure 1B is an enlargement of a portion of an individual fastener from the assemblage of Figure 1A;

Figure 2B is a plan view Of stretching apparatus used to manufacture the assemblage shown in Figures 1A and 1B;

Figure 3 is a perspective view of heating members used in the machines shown in Figures 2A and 2B;

Figures 4A and 4B are views illustrating an alternative method of manufacture;

Figure 5 is a perspective view of a further assemblage of fasteners; and

Figures 6A to 6C are perspective views of alternative assemblages prior to stretching.

## DETAILED DESCRIPTION

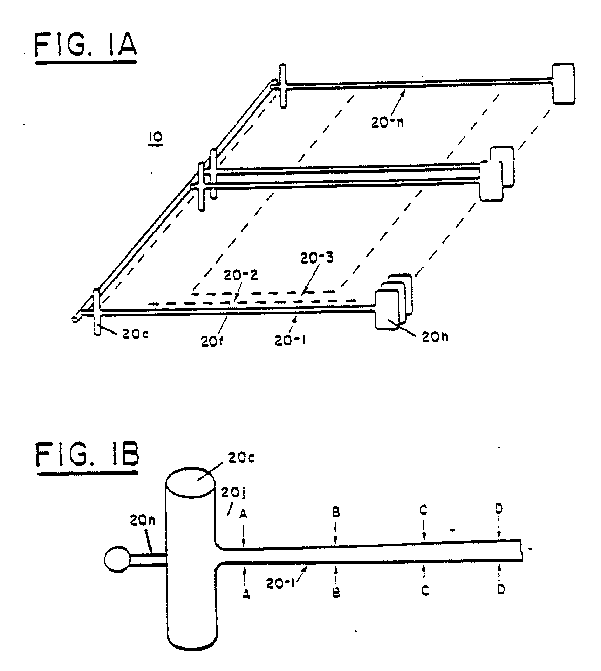

Turning now to the drawings, Figure 1A shows an assemblage 10 of individual fasteners 20-1 to 20-n of which each individual fastener, for example the first fastener 20-1, includes a cross bar 20c which is joined to a head 20h by a filament 20f . The fasteners 20-1 to 20-n are collectively joined to a runner bar 11 by individual necks 20n which extend from the cross bars 20c .

Although the filaments 20f of the fasteners 20-1 to 20-n appear to be cylindrical over the major portion of their length beginning at the cross bars 20c , they typically display a region of slight taper. This is illustrated in the enlarged fragment of an individual fastener 20-1 shown in Figure 1B. In the illustrative fastener 20-1 of Figure 1B there is a minimum diameter of approximately 5.59 mm at position A, located approximately 16.76 mm from the junction 20j of the fastener 20-1 with the cross bar 20c . The diameter of the filament 20f gradually increases to 6.10 mm at position B, then to 6.35 mm at position C and further to 6.60 mm at position D.

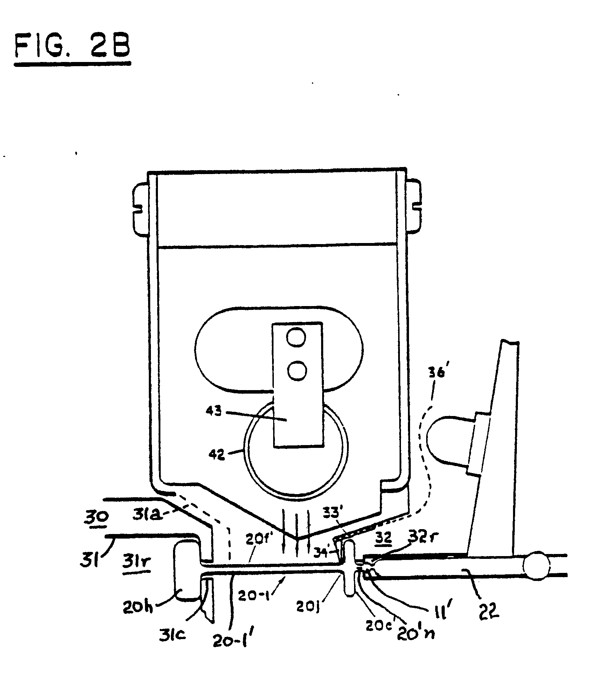

The fastener assembly shown in Figures 1A and 1B is stretched in a machine 30 of the construction shown in Figure 2B. The machine 30 includes an outer jaw 31 and an inner jaw 32.

The outer jaw has an interior region 31r for receiving one end of the product to be stretched and the inner jaw 32 has a similar interior region 32r for the other end of the product.

In the case of an assemblage of unstretched fasteners, of which only the first member 20-1 is visible in Figure 2B, the head of the fastener 20h is within the interior region 31r of the outer jaw 30 and the runner bar 11 is within the interior region 32r of the inner jaw 32.

The outer jaw 31 has a channel 31c to accommodate the portion of the filament 20f' near the head 20h' . A similar channel is included in the inner jaw 32.

In addition, the inner jaw 32 includes a heated probe 34'. The heating effect is provided by an inner heating coil which is energized over a cable 36 as desired. It is particularly desirable to operate the probe 34' shortly before and during the stretching operation. In some cases the probe 34 is heated only during stretching. In other cases heating is also applied after stretching has terminated. In still other cases the probe is heated continuously.

In the particular embodiment of Figure 2B, the inner jaw 32 is stationary and the outer jaw 31 is separable away from the inner jaw by, for example, an hydraulic mechanism.

Only one-half of the machine 30 is illustrated in Figure 2B and a similar half is used for the concurrent stretching of another set of blanks which is joined to the set within the jaws 31 and 32 by a connector 22 constituted by a gating sprue.

After the assemblages of fasteners, as joined by the degatable connector or sprue 22, are fed to the machine 30 with, for example, the illustrated fastener 20-1' positioned between the jaws 31 and 32, the outer jaws, for example the jaw 31, are operated to take up slack in the fastener and move from an initial position 31a to an intermediate position.

In the general case stretching then proceeds by moving the outer jaw 31 to an outermost position away from the inner jaw 32. To accelerate the stretching and to facilitate the stretching of stretch resistant crystallized plastics materials such as polypropylene, a controlled heat source 40 is used.

As can be seen in Figure 2B, a heat mask or shield 33' is employed by attaching an extension to the inner jaw 32.

The controlled heat source 40 includes a holder 41 and a quartz infra-red lamp 42 which is described in detail below. The heat from the lamp 42 is initially applied when the outer jaw is in its position nearest to the jaw 32. The heat effect continues to be applied as the jaw 31 moves to its final position which results in the production of the fastener shown in Figure 1B. After stretching is completed, the jaw 31 is relaxed to permit removal of the stretched fasteners from the machine 30. The heat shield 33', which is affixed to the jaw 32, protects the cross bar 20 c ' from adverse heating effects, and, in particular, limits the extent to which the cross bar may become adversely affected during the stretching operation.

The channel of the inner jaw 32 shields the neck 20'n of the fasteners so that the gripping action of the jaw 32 is against the runner bar 11'. The shielding of the neck 20'n prevents it from being inadvertently stretched, while the gripping of the runner bar 11' prevents inadvertent damage to the cross bar 20'c .

The lamp 42 is positioned in an adjustable end mount 43 in order to direct the heating to the desired portion of the filament 20f.

The end mount 43 is adjustable in any standard way to control the direction of the infra-red radiation from the lamp 42.

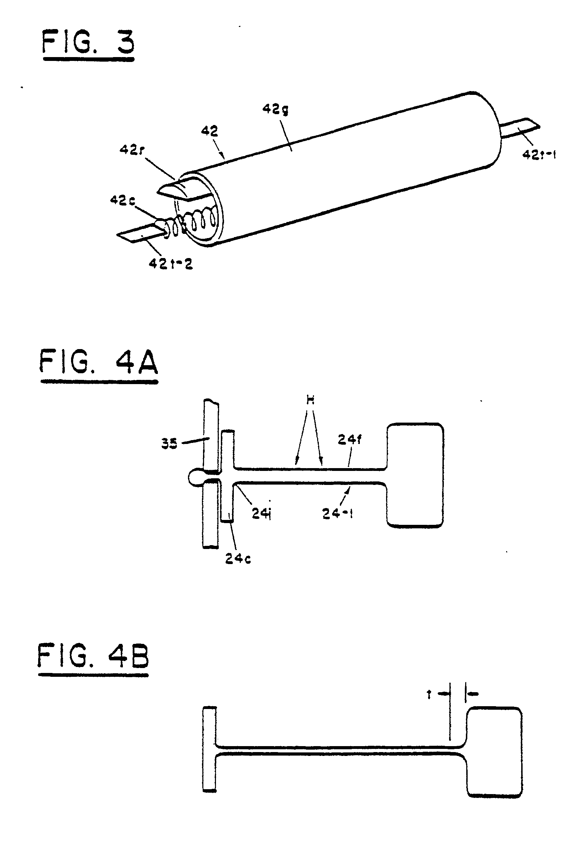

A perspective view of a portion of the lamp 42 shown in Figure 2B is shown in Figure 3. A quartz tube 42g encloses a resistor coil 42c which has terminal tabs 42t -1 and 42t -2. Above the coil 42c there is an internal reflector 42r which orthogonally directs the infra-red radiation. The lamp 42 may be then known as a Unit Tube Infra-Red Heater available from Hugo N. Cahnman, Associates, Inc., 125-10 Queens Boulevard, Kew Gardens, New York 11415, United States of America. It has an infra-red emission range of 2 to 5 microns and provides a temperature between 315 and 1100C.

The temperature H of the heat source 42 and time T during which the fasteners are exposed to the heating effect is desirably optimised so that the product of the heating effect and the temperature is below the value which would cause melting of the fasteners.

The internal reflector 42r of the heat source 42 can cause about 85 percent of the radiated energy to be directed at the product.

In addition, a supplemental heating is supplied by a heated probe 34' mounted at the end of the shield 33'. The probe 33' is energized over a cable 36'. The probe 33' is in actual physical contact with the filament 20-1. The particular probe 33' of Figure 2B is triangular in cross section and makes a point contact with the filament 20-1.

An alternative form of fastener is shown in the jaw 35 in Figure 4A. For the individual fastener 24-1 of Figure 4A the filament 24F is substantially cylindrical throughout the major portion of its length. Because of the heat effect H, stretching takes place as illustrated in Figure 4B. Since the filament is of cylindrical cross section its stretched counterpart is also substantially cylindrical. However, there is a slight region of taper t near the head 24h . The cylindrical filament 24f , although more difficult to control, does not require as great a mold expense and avoids the possibility of having a region of excessive thickness which could lead to inadvertent fracture during stretching.

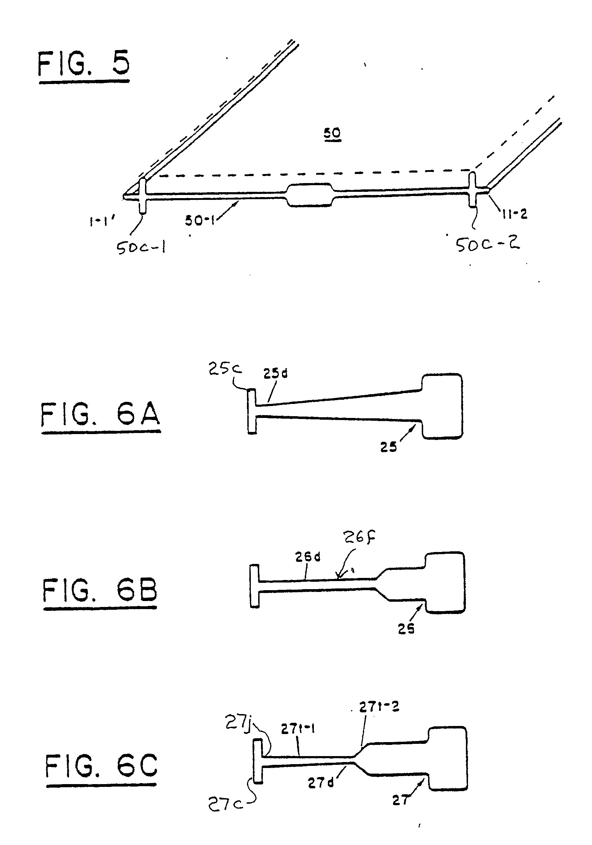

Figure 5 shows an assemblage 50 of fasteners each of which is stretched and has two cylindrical filaments 50-1 and cross bars 50c -1 and 50c -2 at opposite ends and rubber bars 11-1 and 11-2 associated with the respective cross bars. Either of the runner bars 11-1 or 11-2 can be used for feeding purposes in a gun as described in, for example, United States Patent Specification No. 3,103,666 mentioned above. The other runner bar 11-2 or 11-1 gives stiffness to the assemblage 50 and facilitates their being handled during stretching operations where controlled heating is employed. One of the runner bars can be removed by degating at the completion of the stretching operation. It will be apparent that an auxiliary runner bar to facilitate handling in stretcher operations which employ controlled heating can be used for other kinds of fasteners and devices.

Other kinds of blanks which can be subjected to stretching in the manner described are shown in Figures 6A to 6C. In Figure 6A the unstretched fastener 25 has its minimum diameter 25d a short distance from the cross bar 25c . In Figure 6B the fastener 26 has a substantially cylindrical filament 26f with a minimum diameter in an intermediate position 26d . In Figure 6C the minimum diameter 27d is at the junction of a decreasing taper 27t -1 (beginning at the cross bar 27c ) and a forward taper 27t -2.

When uniform heating is applied to the filaments 25f , 26f , and 27f in Figures 6A and 6C stretching begins at the minimum diameter positions 25d , 26d and 27d and progresses in the direction of the succeeding minima. Thus in the case of Figure 6C, since the second taper 27t -2 has a higher shoulder than the first taper 27t -1, stretching takes place to the junction 27j before there is any significant stretching in the region of the forward taper 27t -2.

## Claims

1. A method of manufacturing an assemblage (10;50) of fasteners (20;24) which comprises moulding the assemblage as a set of connected individual fasteners, each individual fastener including a cross bar (20c ;24c ;50c -1,50c -2) which is joined to a filament (20f ,24f ,50-1) and stretching the fasteners simultaneously while subjecting them to controlled heating at the junctions of their cross bars and filaments and while protecting the cross bars from adverse heating effects, characterised in that the controlled heating is effected by contacting each filament by a heated probe (34;34') at a position adjacent to but spaced from the respective cross bar, and in that said filament is subjected to a supplemental heating effect.

2. A method according to claim 1 wherein said probe makes point contact with said filament.

3. A method according to claim 1 or claim 2 in which the fasteners are connected at one end by a common member (11';11-1,11-2) and the stretching takes place using jaws (31,32) which grasp the common member and the other end of the fasteners.

4. A method according to any of claims 1 to 3 in which the assemblage is fed into a stretching machine with jaws which grip the fasteners at opposite ends and the jaws are separated to take up slack in the fasteners while causing their filaments to become controllably heated, after which the jaws are separated to stretch the filaments simultaneously and are then relaxed to free the assemblage of stretched fasteners and permit their removal.

5. A method as claimed in any of claims 1 to 4 in which the material of the fasteners is a crystalline substance whose molecules are reoriented by stretching.

6. A method as claimed in any of claims 1 to 4 in which the fasteners are moulded from polypropylene material which is resistant to cold stretching.

## Revendications

1. Procédé de fabrication d'un ensemble (10; 50) d'attaches (20; 24) qui comprend le moulage de cet ensemble sous la forme d'un jeu d'attaches individuelles reliées les unes aux autres, chaque attache individuelle comprenant une barrette transversale (20c , 24c ; 50c -1, 50c -2) reliée à un filament (20f , 24f , 50-1), et l'étirage des attaches effectué tout en les soumettant à un chauffage contrôlé au niveau des jonctions de leurs barrettes transversales avec les filaments et en protégeant les barrettes transversales contre des effets thermiques indésirables, caractérisé en ce qu'on effectue le chauffage contrôlé en amenant chaque filament en contact avec une sonde chauffée (34; 34'), à un endroit adjacent à la barrette transversale respective, mais espacé de celle-ci, et on soumet ledit filament à un effet de chauffage supplémentaire.

2. Procédé suivant la revendication 1, dans lequel ladite sonde établit un contact ponctuel avec ledit filament.

3. Procédé suivant la revendication 1 ou 2, dans lequel les attaches sont reliées à une extrémité par un élément commun (11'; 11-1, 11-2) et l'étirage fait appel à des mâchoires (31, 32) qui saisissent l'élément commun ainsi que l'autre extrémité des attaches.

4. Procédé suivant l'une quelconque des revendications 1 à 3, dans lequel l'ensemble est introduit dans une machine d'étirage comportant des mâchoires qui saisissent les attaches aux extrémités opposées et les mâchoires sont écartées pour rattraper le mou dans les attaches tandis que les filaments sont soumis à un chauffage contrôlé, après quoi les mâchoires sont écartées pour étirer simultanément les filaments et sont ensuite relâchées pour libérer l'ensemble d'attaches étirées et permettre leur enlèvement.

5. Procédé suivant l'une quelconque des revendications 1 à 4, dans lequel la matière des attaches est une substance cristalline dont les molécules sont réorientées par l'étirage.

6. Procédé suivant l'une quelconque des revendications 1 à 4, dans lequel les attaches sont moulées en polypropylène qui est résistant a 1'étirage à froid.

## Ansprüche

1. Verfahren zur Herstellung einer Einheit (10;50) von Befestigungselementen (20;24), bestehend aus der Formung der Einheit als Satz einzelner, miteinander verbundener Befestigungselemente, wobei jedes einzelne Befestigungselement einen Querstab (20c; 24c;50c-1, 50c-2) aufweist, der mit einem Faden (20f,24f,50-1) verbunden ist, und wobei gleichzeitig die Befestigungselemente gestreckt und einer gesteuerten Erwärmung an den Verbindungsstellen ihrer Querstäbe mit den Fäden unter Schutz der Querstäbe vor nachteiligen Wärmeauswirkungen unterworfen werden, dadurch gekennzeichnet, daß die gesteuerte Erwärmung mittels Kontaktierens eines jeden Fadens mit einem erwärmten Finger (34;34') an einer Stelle angrenzend am, jedoch im Abstand vom jeweiligen Querstab durchgeführt wird, und daß der genannte Faden einer zusätzlichen Wärmeeinwirkung unterworfen ist.

2. Verfahren nach Anspruch 1, wobei der genannte Finger mit dem genannten Faden in Punkt-Berührung kommt.

3. Verfahren nach Anspruch 1 oder 2, bei dem die Befestigungselemente an einem Ende mittels eines gemeinsamen Teiles (11'; 11-1, 11-2) verbunden sind und das Strecken unter Verwendung von Klemmbacken (31,32) erfolgt, die den gemeinsamen Teil und das andere Ende der Befestigungselemente erfassen.

4. Verfahren nach einem der Ansprüche 1 bis 3, bei dem die Einheit einer Streckmaschine mit Klemmbacken zugeführt wird, die die Befestigungselemente an gegenüberliegenden Enden erfassen, und die Klemmbacken auseinander bewegt werden, um die Schlaffheit aus den Befestigungselementen zu nehmen, während bewirkt wird, daß deren Fäden gesteuert erwärmt werden, worauf die Klemmbacken auseinander bewegt, um die Fäden gleichzeitig zu strecken, und dann gelockert werden, um die Einheit der gestreckten Befestigungselemente freizugeben und ihre Entnahme zu gestatten.

5. Verfahren nach einem der Ansprüche 1 bis 4, bei dem das Material der Befestigungselemente eine kristalline Substanz ist, deren Moleküle durch Strecken neu ausgerichtet werden.

6. Verfahren nach einem der Ansprüche 1 bis 4, bei dem die Befestigungselemente aus Polypropylen-Material geformt sind, das gegen Kalt-Strecken beständig ist.

## FIG. IA

10

20-n

20-3

20-2

20c

20f

20-1

20h

## FIG. IB

20c

20j

20n

A

B

C

D

A

20-1

B

C

D

# FIG. 2B

## FIG. 3

42g

42

42r

42c

42t-1

42t-2

## FIG. 4A

H

35

24f

24i

24-1

24c

## FIG. 4B

t

# FIG. 5

# FIG. 6A

# FIG. 6B

# FIG. 6C